Europäisches Patentamt

**European Patent Office**

**Office européen des brevets**

(11) Numéro de publication: **0 288 343 B1**

(12) **FASCICULE DE BREVET EUROPEEN**

(45) Date de publication de fascicule du brevet: **09.09.92**

(21) Numéro de dépôt: **88400715.4**

(22) Date de dépôt: **24.03.88**

(51) Int. Cl.⁵: $H02K\ 7/09$, $H02K\ 7/06$, $H02K\ 33/14$

(54) Moyens de contrôle électromagnétique des vibrations dans les machines électriques.

(30) Priorité: **26.03.87 FR 8704201**

(43) Date de publication de la demande:
**26.10.88 Bulletin 88/43**

(45) Mention de la délivrance du brevet:
**09.09.92 Bulletin 92/37**

(84) Etats contractants désignés:
**DE ES GB IT NL SE**

(56) Documents cités:
**BE-A- 727 071**
**CH-A- 585 585**
**DE-A- 2 114 040**
**FR-A- 1 186 527**
**US-A- 3 988 658**

(73) Titulaire: **ETAT-FRANCAIS représenté par le DELEGUE GENERAL POUR L'ARMEMENT (DPAG)**
**Bureau des Brevets et Inventions de la Délégation Générale pour l'Armement 26, Boulevard Victor**
**F-75996 Paris Armées(FR)**

(72) Inventeur: **Foggia, Albert**
**9, le Bourg des Verchères Dommartin**
**F-69380 Lozanne(FR)**
Inventeur: **Maestre, Jean-François**
**Allée B 334 Balmont Ouest**
**F-69000 Lyon(FR)**
Inventeur: **Cros, Christophe**
**12, rue Sadie Carnot**
**F-92000 Nanterre(FR)**
Inventeur: **Sabonnadière, Jean-Claude**
**38B, Avenue de la Chartreuse**
**F-38240 Meylan(FR)**

Rank Xerox (UK) Business Services

## Description

La présente invention concerne le domaine technique des machines électriques synchrones ou à courant continu, du type comprenant un stator et un rotor , l'un constituant l'inducteur alimenté en courant continu et l'autre l'induit de la machine , ou inversement.

Lors du fonctionnement de ce type de machine, il apparaît une variation de flux magnétique au niveau de chaque pôle d'exitation , ayant pour effet d'engendrer des vibrations d'origine électromagnétique.

Une analyse approfondie du spectre des vibrations révèle que certaines de celles-ci sont liées à la structure même des machines et proviennent , notamment , du balourd du rotor et du passage des dents rotoriques sous les pôles d'exitation.

Pour ce qui des vibrations causées par le balourd du rotor, les brevets DE-A-2 114 040 et FR-A-1 186 527 décrivent chacun un dispositif de stabilisation gyroscopique du rotor permettant de réduire voire même de supprimer ce type de vibrations.

Une autre cause de la variation de flux magnétique provient des sollicitations ou vibrations engendrées par l'environnement extérieur et par les organes auquels ces machines électriques sont associées.

Il en résulte que les machines de ce type sont le siège de vibrations d'origine électromagnétiques qui se transmettent, d'une manière générale, à leur structure porteuse et/ou à leurs éléments constitutifs et, notamment , leur rotor.

La propagation de ces vibrations rend la structure et/ou les organes associés facilement détectables, ce qui représente un inconvénient majeur dans certaines applications spécifiques de ces machines.

De plus, les vibrations engendrent , inévitablement, des contraintes mécaniques appliquées aux organes comme , par exemple, de la fatigue.

Cependant, dans d'autres applications de ces machines, il peut être avantageux d'utiliser et même d'augmenter le niveau de ces vibrations et notamment , pour les machines équipant les installations d'extraction ou de soutirage de produits pulvérulents dans des silos où un effet de voûte à tendance à se produire.

Les vibrations de ces machines peuvent être transmises à la trémie chargée de produits pour rompre l'effet de voûte.

Il apparaît donc le problème général du contrôle à volonté, en fonction du type d'application recherché, des vibrations d'origine électromagnétique de ces machines qui n'a pas reçu jusqu'à maintenant de solutions acceptables.

L'invention a, justement, pour but de remédier à ce problème en proposant des moyens électromagnétiques de contrôle à volonté des vibrations d'origine électromagnétique de ce type de machines.

L'invention a aussi pour but d'offrir, par des moyens électromagnétiques, une possibilité de solliciter radialement le rotor de ce type de machines.

L'invention vise, notamment, à minimiser, voire à éliminer totalement, ce type de vibrations.

L'invention vise, également, à augmenter, d'une manière non négligeable, ce type de vibrations.

L'invention vise, encore, des moyens électromagnétiques de contrôle simples, facilement adaptables et de faible coût.

Pour atteindre les buts ci-dessus, les machines électriques conformes à 1'invention comprennent, pour au moins un pôle, des moyens agissant sur les enroulements associés audit pôle, de manière à modifier localement le champ magnétique et imposer une sollicitation radiale temporaire au rotor en relation avec des vibrations d'origine électromagnétique produites par la machine, ces moyens comprenant :

- un capteur de détection de la fréquence de rotation du rotor,
- un capteur de détection des vibrations en amplitude et en phase, associé à un filtre suiveur passe-bande centré sur la fréquence de rotation du rotor,
- des moyens d'application aux enroulements associés d'un signal d'excitation alternatif synchronisé à la fréquence de rotation du rotor,
- et des moyens d'asservissement des moyens d'application, modifiant la phase et le module du signal d'excitation alternatif, en relation avec la phase et l'amplitude des vibrations détectées.

Une definition précise de l'invention est donnée dans les revendications.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une section droite transversale schématique d'une machine munie d'enroulements d'excitation.

La **fig. 2** représente le schéma bloc, conforme à l'invention, d'alimentation des enroulements d'excitation.

La **fig. 3** est un exemple de groupement et d'alimentation des enroulements d'excitation d'une machine à nombre élevé de pôles d'excitations.

La **fig. 4** illustre la forme du signal d'alimentation des enroulements d'excitation.

Les **fig. 5A à 5D** illustrent le principe d'application du champ magnétique créé par le signal d'alimentation des enroulements d'excitation.

La **fig. 6** est une section droite transversale schématique d'une machine électrique selon une variante de réalisation conforme à l'invention.

La **fig. 7** représente le schéma bloc d'alimentation des enroulements d'excitation d'une machine électrique selon la **fig. 6.**

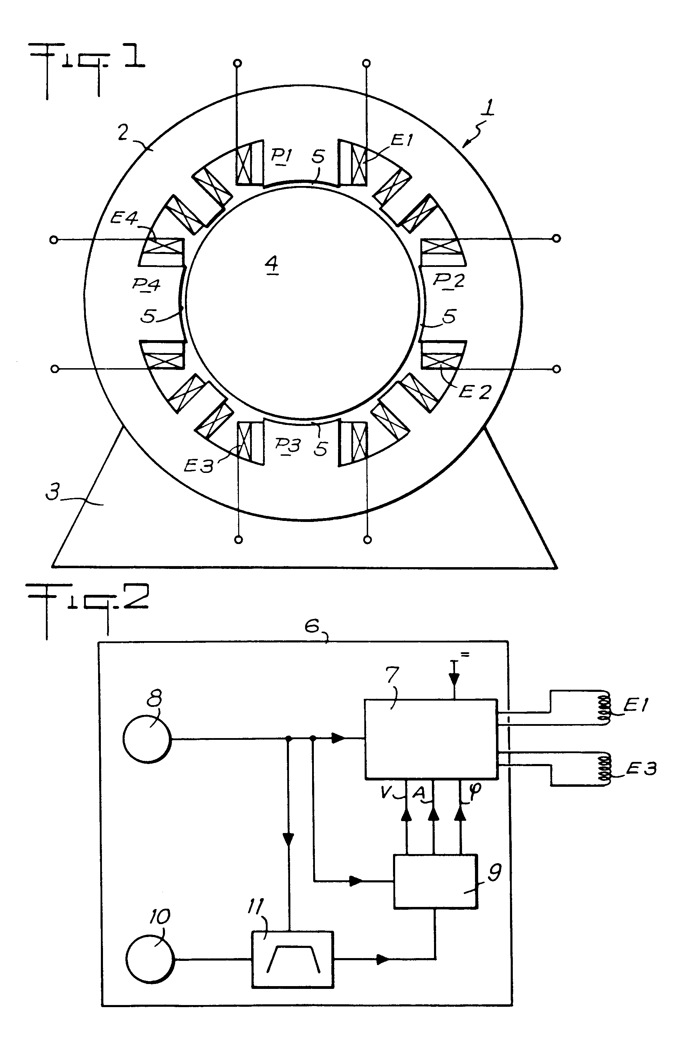

La **fig. 1** illustre, à titre d'exemple, une machine électrique **1** tétrapolaire, du type à courant continu comprenant un stator **2** fixé à un bâti **3,** et un rotor **4** monté coaxial à l'intérieur du stator **2** par des paliers, non représentés.

Le stator **2** constitue l'inducteur de la machine électrique et possède, à cet effet, quatre pôles $P_1$-$P_4$ d'excitation régulièrement répartis angulairement. Chacun des pôles $P_1$-$P_4$ porte un enroulement d'excitation $E_1$-$E_4$ respectivement alimenté, de façon classique, en courant continu pour générer le champ magnétique d'excitation.

Le rotor **4** constitue l'induit de la machine et comporte, à sa périphérie, des enroulements d'induit, non représentés, mais organisés de toute façon connue de l'homme de l'art. Le rotor **4** et, plus précisément, son circuit magnétique, canalise le flux magnétique d'excitation qui traverse un entrefer **5** délimité entre chaque pôle et le rotor.

Il a été représenté, à titre de simplification, une machine à courant continu tétrapolaire, mais l'invention s'applique, également, à une machine possédant, d'une manière générale, **n** pôles d'excitation $P_i$, associés chacun à un enroulement inducteur $E_i$.

Par ailleurs, l'invention s'applique aussi aux machines électriques, du type synchrone, qui comportent, de façon connue, un stator constitutif de l'induit et un rotor constitutif de l'inducteur.

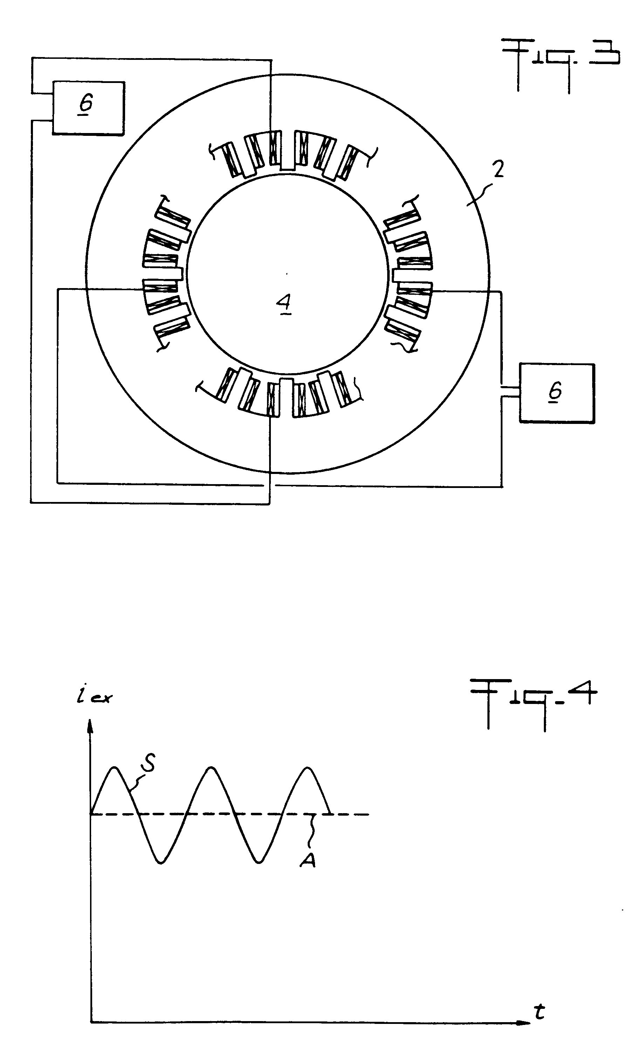

Conformément à l'invention, les enroulements d'excitation $E_1$-$E_4$ sont reliés à des moyens **6** de commande de leur alimentation en courant d'excitation $i_{ex}$, comme illustré à la **fig. 2.**

De préférence, les moyens de commande **6** sont en nombre égal au nombre de paires de pôles et alimentent les enroulements des pôles diamétralement opposés comme, par exemple, les enroulements $E_1$, $E_3$ respectifs des pôles $P_1$, $P_3$.

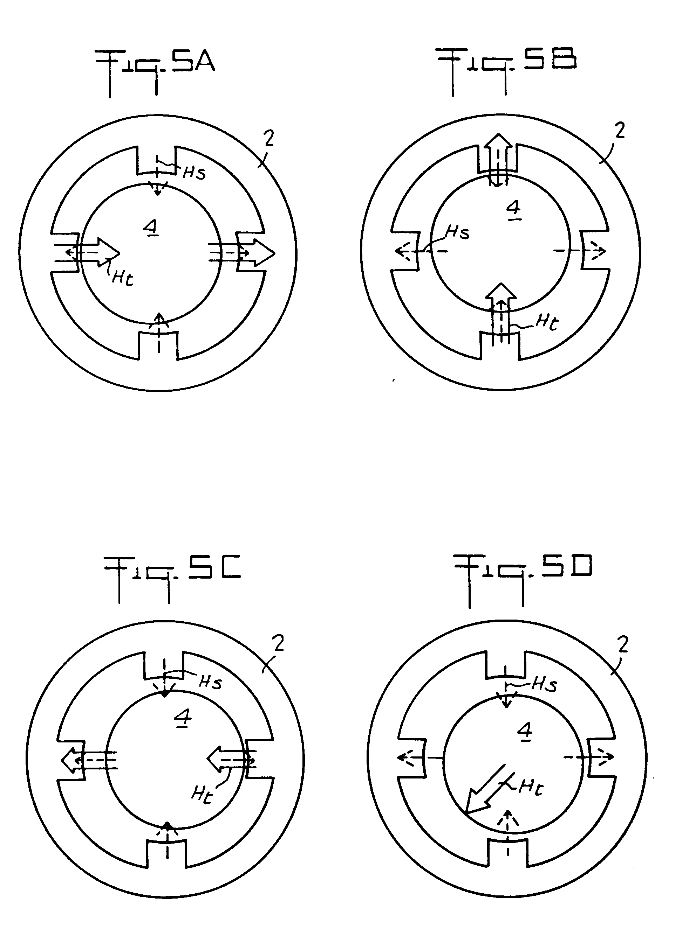

Toutefois, il peut être prévu, pour les machines possédant un nombre élevé de pôles, un moyen de commande **6** individuel pour chaque enroulement d'excitation associé à un pôle. De même, il peut être aussi envisagé de grouper en série les enroulements d'excitation, de manière à créer deux paires de pôles opposées et déphasées en quadrature avec, uniquement, un moyen de commande **6** individuel pour les enroulements de chaque paire de pôles ainsi créée, comme illustré à la **fig. 3.**

D'une manière générale, il faut noter que le nombre de moyens de commande **6** doit toujours être au moins égal à deux.

Les moyens de commande **6** se composent de moyens **7** d'application du courant d'excitation $i_{ex}$ aux enroulements inducteurs. Les moyens d'application **7** sont synchronisés à la fréquence de rotation du rotor qui est détectée par un capteur de vitesse **8** monté sur le rotor **4.** Les moyens d'application **7** sont pilotés par des moyens d'asservissement **9** commandés en entrée par la fréquence de rotation du rotor et par les données détectées par un capteur de vibrations **10** et filtrées **11.**

Les moyens d'application **7** sont réalisés, par exemple, par un onduleur à transistors à modulation de largeur d'impulsions, un pont redresseur monophasé ou triphasé ou par un amplificateur de puissance.

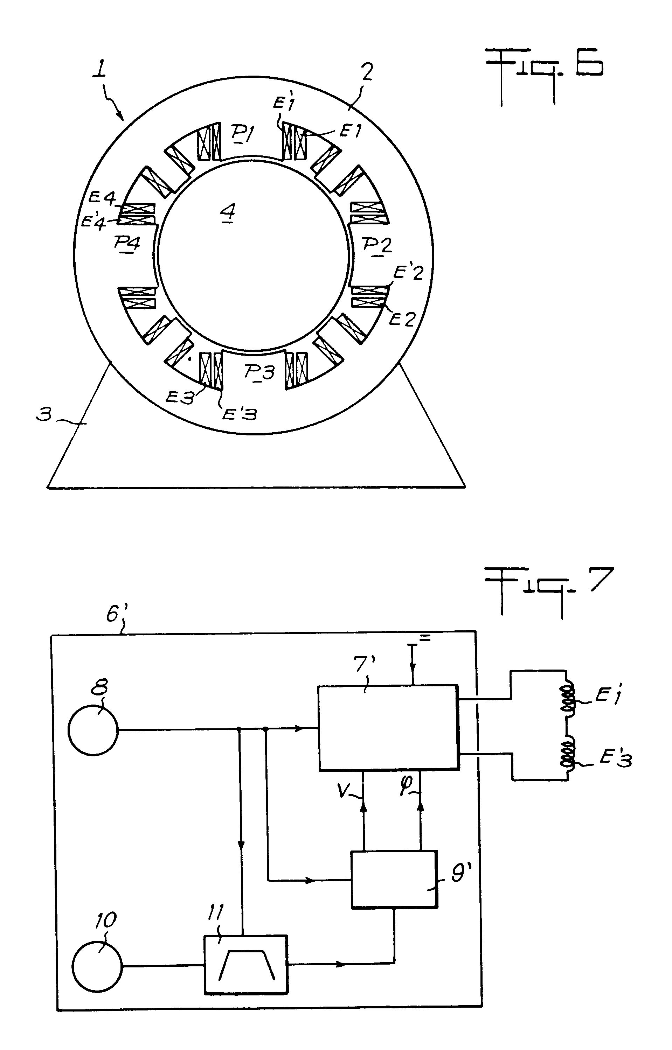

Les moyens d'application **7** délivrent un courant d'excitation $i_{ex}$ qui est composé d'un signal continu **A** auquel est superposé un signal variable **S (fig. 4).**

Le signal continu **A** crée le champ magnétique d'excitation nécessaire pour obtenir un fonctionnement normal de la machine électrique.

Le signal **S,** variable alternativement et, de préférence, sinusoïdal, modifie le champ magnétique d'excitation, en relation avec les variations de flux magnétique ou d'entrefer, générateur de vibrations d'origine électromagnétique liées à la structure de la machine ou à des sollicitations extérieures.

Il peut être considéré que le signal **S** est de la forme : **V sin ($\omega$t + $\phi$).** La pulsation $\omega$ correspond à la pulsation de rotation du rotor. L'amplitude **V** et la phase $\phi$ du signal sont, respectivement, représentatives de l'amplitude et de la position angulaire des vibrations par rapport au rotor et, par extension, de la variation d'entrefer détectée par les capteurs de vibrations **10** et de vitesse **8.**

A cet effet, le capteur de vibrations **10** peut être constitué par une sonde à effet **Hall,** un capteur d'accélération ou de proximité monté, par exemple, au droit des pôles. Les informations détectées par le capteur **10** sont traitées dans le filtre **11,** du type suiveur passe-bande centré sur la fréquence de rotation du rotor, pour éliminer ainsi les bruits parasites extérieurs à la bande passante déterminée.

Les moyens d'asservissement **9,** qui délivrent le signal continu **A,** permettent de modifier, à volonté, l'amplitude **V** et la phase $\phi$ du signal **S** par rapport au rotor. Cependant, le signal continu **A** peut être délivré directement par les moyens d'application **7.**

Selon une première caractéristique, les moyens d'asservissement **9** définissent la phase $\phi$ et l'amplitude **V,** de manière à diminuer les vibrations d'origine électromagnétique. A cet effet, les moyens **9** recherchent, par calcul, le minimum des données fournies par le capteur de vibrations qui dépend des variables **V** et $\phi$. Le minimum est recherché, d'abord par rapport à l'une de ces deux variables, ensuite par rapport à l'autre, jusqu'à l'obtention du minimum absolu.

Selon une seconde caractéristique, les moyens d'asservissement **9** recherchent, toujours par calcul, le maximum des données fournies par le capteur de vibrations **10,** de manière à augmenter les vibrations d'origine électromagnétique.

Les moyens de commande **6** délivrent donc un courant d'excitation $i_{ex}$ permanent, calé sur la fréquence de rotation du rotor et modulable à volonté en amplitude et en phase, permettant de solliciter radialement le rotor de la machine, en vue d'augmenter ou d'éliminer les vibrations d'origine électromagnétique.

A cet effet, les **fig. 5A à 5D** illustre le principe de l'action sur le rotor du flux magnétique créé par le courant d'excitation pour parvenir, par exemple, à compenser ces vibrations. Le champ magnétique statique $H_s$, créé par les pôles d'excitation, est représenté en trait interrompu.

Il doit être considéré que les moyens de commande **6** alimentent les enroulements avec des courants d'excitation qui sont déphasés entre eux pour réaliser un champ tournant. Par exemple, pour une machine à quatre pôles ou quatre groupes de pôles formant ainsi deux paires de pôles, le moyen de commande, associé à une paire de pôles, délivre un courant d'excitation de forme sinusoïdale, tandis que le moyen de commande associé à l'autre paire délivre un courant d'excitation de forme cosinusoïdale.

Ainsi, pour un régime établi de fonctionnement de la machine à une fréquence de rotation du rotor donnée et pour des vibrations détectées et localisées en amplitude et en phase, le courant d'excitation est glissant pour définir un champ magnétique rétrograde, tournant à la vitesse de rotation du rotor. Le champ tournant rétrograde $H_t$, représenté en trait continu sur les **fig. 5,** est calé, par le réglage du déphasage, pour suivre les vibrations et, plus précisément, la variation d'entrefer, en vue de la compenser.

Lorsque la variation de flux intervient, par exemple au niveau du pôle $P_2$, le flux d'excitation généré par le pôle $P_1$ est modifié et celui de $P_3$ modifié aussi, mais de façon complémentaire et opposée, en vue de compenser le déséquilibre des forces qui s'exercent sur le rotor dues aux variations d'entrefer.

Les **fig. 6** et **7** illustrent une variante de réalisation de l'objet de l'invention, dans laquelle chaque pôle d'excitation $P_1$-$P_4$ de la machine est muni, respectivement, d'enroulements supplémentaires de compensation $E'_1$-$E'_4$, montés de façon classique.

Les enroulements d'excitation $E_1$-$E_4$ sont alimentés par le signal continu **A,** créateur du champ magnétique d'excitation nécessaire au fonctionnement normal de la machine, tandis que les enroulements de compensation $E'_1$-$E'_4$ sont alimentés par le signal alternatif **S,** de forme générale décrite ci-dessus.

Il en résulte que le champ magnétique d'excitation résultant est analogue au champ magnétique produit par le courant continu **A** modulé par le signal alternatif **S.**

Les moyens de commande **6',** associés aux enroulements de compensation $E'_1$-$E'_4$, possèdent une configuration fonctionnelle identique à celle des moyens de commande **6** déjà décrits.

Les moyens d'asservissement **9'** permettent, simplement, de modifier la phase $\phi$ et l'amplitude **V** du signal alternatif **S** délivré par les moyens d'application **7',** tel qu'un onduleur monophasé.

Les moyens de commande **6, 6'** permettent de compenser les vibrations d'origine électromagnétique dues au passage des encoches rotoriques sous les pôles statoriques.

A cet effet, la pulsation des encoches est obtenue par le capteur de vitesse dont le nombre d'impulsions par tour est un multiple du nombre d'encoches du rotor.

Les moyens de commande **6, 6'** délivrent donc un signal d'excitation **S** convenable, représentatif de la variation d'entrefer produite à chaque passage des dents rotoriques sous un pôle d'excitation.

A cet égard, chaque enroulement de compensation $E'_1$-$E'_4$ possède des moyens de commande **6, 6'** individuels.

Il est à noter qu'un capteur de vitesse **8,** unique, monté sur le rotor, peut assumer la détection de la fréquence de rotation du rotor.

## Revendications

1. Machine électrique synchrone ou à courant continu, du type comportant un stator **(2)** et un rotor **(1),** l'un constituant l'induit et l'autre portant **(n)** pôles **($P_i$)** associés chacun à des enroulements,

   caractérisé en ce que pour au moins un pôle, des moyens **(6, 6')** agissent sur les enroulements associés audit pôle, de manière à modifier localement le champ magnétique et imposer une sollicitation radiale temporaire au rotor en relation avec des vibrations d'origine électromagnétique produites par la machine, ces moyens comprenant :

   - un capteur **(8)** de détection de la fréquence de rotation du rotor,
   - un capteur **(10)** de détection des vibrations en amplitude et en phase, associé à un filtre (11) suiveur passe-bande centré sur la fréquence de rotation du rotor,

- des moyens (7, 7') d'application aux enroulements associés d'un signal d'excitation alternatif synchronisé à la fréquence de rotation du rotor,
- et des moyens (9, 9') d'asservissement des moyens d'application, modifiant la phase et le module du signal d'excitation alternatif, en relation avec la phase et l'amplitude des vibrations détectées.

2. Machine selon la revendication 1, caractérisée en ce que les enroulements associés sont constitués des enroulements d'excitation $(E_i)$ de la machine, alimentés par un courant continu d'excitation (A) modulé par un signal alternatif (S) délivré par les moyens d'application (7) qui sont pilotés par les moyens d'asservissement (9).

3. Machine selon la revendication 1, caractérisée en ce que les enroulements associés sont constitués des enroulements $(E_i)$ d'excitation de la machine alimentés par un signal continu (A) et d'au moins un enroulement de compensation $(E'_i)$ alimenté par un signal alternatif (S) délivré par les moyens (7') d'application qui sont pilotés par les moyens d'asservissement (9').

4. Machine selon les revendications 1 à 3, caractérisée en ce que le signal alternatif (S), délivré par les moyens d'applications (7, 7'), est du type sinusoïdal.

5. Machine selon les revendications 1 à 4, caractérisée en ce que le signal alternatif délivré par les moyens d'application (7, 7') est généré pour être une image des vibrations à atténuer ou à amplifier dans une bande de fréquence déterminée.

6. Machine selon les revendications 1 à 5, caractérisée en ce que les moyens d'asservissement (9, 9') modifient la phase et l'amplitude du signal d'excitation pour minimiser les vibrations détectées.

7. Machine selon les revendications 1 à 5, caractérisée en ce que les moyens d'asservissement (9, 9') modifient la phase et l'amplitude du signal d'excitation pour maximiser les vibrations détectées.

8. Machine selon les revendications 1 à 7, caractérisée en ce que pour les (n) pôles, les enroulements des pôles diamétralement opposés sont alimentés en oposition de phase simultanément par le signal d'excitation alternatif délivré par les moyens d'application (6, 6').

9. Machine selon les revendications 1 à 7, caractérisée en ce que les enroulements des (n) pôles sont groupés pour former deux paires de pôles dont les enroulements associés à chaque paire sont alimentés par un signal d'excitation déphasé en quadrature.

10. Machine selon les revendications 1 à 7, caractérisée en ce que les moyens de commande (6') agissent sur chacun des enroulements de compensation associés aux (n) pôles avec une fréquence multiple du nombre d'encoches portées par l'induit.

## Claims

1. Synchronous or d.c. electrical motor, of the type comprising a stator (2) and a rotor (1), with one constituting the armature and the other bearing (n) poles $(p_i)$, with each one of these joined to windings, characterized in that at least one pole, of the devices (6,6') acts on the windings joined to the said pole, in such a way that the magnetic field is locally modified and a transitory radial stress is imposed on the rotor in relation to the vibrations of electromagnetic origin produced by the motor, these means comprising:
   - a sensor for detection the rotation frequency of the rotor,
   - a sensor (10) for detecting vibrations with regard to amplitude and phase, joined to a tracking band-pass filter (11) centred on the rotation frequency of the rotor,
   - devices (7,7') for applying an alternating excitation signal to the associated windings synchronized with the rotation frequency of the rotor,
   - and devices (9,9') for controlling the application devices, modifying the phase and the modulus of the alternating excitation signal, in relation to the phase and amplitude of the vibrations detected.

2. Motor according to claim 1, characterized in that the associated windings are made up of excitation windings $(E_1)$ of the motor, supplied by a d.c. excitation current (A) modulated by an alternating signal (S) delivered by the application devices (7) which are controlled by the control devices (9).

3. Motor according to claim 1, characterized in that the associated windings are made up of excitation windings (e₁) of the motor supplied with a continuous signal (a) and at least one compensation winding (E'₁) supplied with an alternating signal (S) delivered by the application devices (7') which are controlled by the control devices (9').

4.   Motor according to claims 1 to 3, characterized in that the alternating signal (S), delivered by the application devices (7, 7') is of the sinusoidal type.

5.   Motor according to claims 1 to 4, characterized in that the alternating signal (S), delivered by the application devices (7, 7') is generated by an image of the vibrations to be reduced or increased within a determined frequency band.

6.   Motor according to claims 1 to 5, characterized in that the control devices (9, 9') modify the phase and the amplitude of the excitation signal in order to minimize the vibrations detected.

7.   Motor according to claims 1 to 5, characterized in that the control devices (9, 9') modify the phase and the amplitude of the excitation signal in order to maximize the vibrations detected.

8.   Motor according to claims 1 to 7, characterized in that for the (n) poles, the windings of the poles diametrically opposite are supplied in antiphase simultaneously by the alternating excitation signal delivered by the application devices (6,6').

9.   Motor according to claims 1 to 7, characterized in that the windings of the (n) poles are grouped to form two pairs of poles whose windings associated with each pair are supplied with an excitation signal in quadrature.

10.  Motor according to claims 1 to 7, characterized in that the control devices (6') act on each of the compensation windings associated with the (n) poles with a frequency that is a multiple of the number of notches in the armature.

## Patentansprüche

1.   Synchrone oder Gleichstrom-Elektromaschine mit einem Stator (2) und einem Rotor (1), wobei der eine der Anker ist und der andere (n) Pole (P$_i$) trägt, die jeweils einer Wicklung zugeordnet sind,
dadurch gekennzeichnet, dass bei mindestens einem Pol die Mittel (6, 6') auf die diesem Pol zugeordneten Wicklungen so einwirken, dass das Magnetfeld örtlich geändert und dem Rotor eine zeitweise radiale Belastung auferlegt wird, in Verbindung mit von der Maschine erzeugten Vibrationen elektromagnetischen Ursprungs, wobei diese Mittel
-   einen Fühler (8) der Rotordrehfrequenz,
-   einen Fühler (10) der Vibrationen in Amplitude und Phase, mit einem auf die Rotordrehfrequenz zentrierten Nachbandfilter (11),
-   die Beaufschlagungsmittel (7, 7') auf die Wicklungen, mit einem auf die Rotordrehfrequenz synchronisierten, alternativen Erregungssignal,
-   und die Regelmittel (9, 9') der Beaufschlagungsmittel, die in Verbindung mit der Phase und der Amplitude der erfassten Vibrationen die Phase und das Modul des alternativen Erregungssignal ändern,
umfassen.

2.   Maschine gemäss Anspruch 1, dadurch gekennzeichnet, dass die zugeordneten Wicklungen aus den Erregungswicklungen (E$_i$) der Maschine bestehen, die von einem Erregungsgleichstrom (A) versorgt werden, der von einem von den durch die Regelmittel (9) gesteuerten Beaufschlagungsmitteln (7) gelieferten alternativen Signal (S) moduliert wird.

3.   Maschine gemäss Anspruch 1, dadurch gekennzeichnet, dass die zugeordneten Wicklungen aus den mit einem Dauersignal (A) versorgten Erregungswicklungen (E$_i$) der Maschine und aus mindestens einer Kompensationswicklung (E'$_i$), die von einem von den durch die Regelmittel (9) gesteuerten Beauschlagungsmitteln (7') gelieferten alternativen Signal versorgt wird, bestehen.

4.   Maschine gemäss den Ansprüchen 1 bis 3, dadurch gekennzeichnet, dass das von den Beaufschlagungsmitteln (7, 7') gelieferte alternative Signal (S) sinusförmig ist.

5.   Maschine gemäss den Ansprüchen 1 bis 4, dadurch gekennzeichnet, dass das von den Beaufschlagungsmitteln (7, 7') gelieferte alternative Signal dazu erzeugt wird, um ein Bild der in einem bestimmten Frequenzbereich zu schwächenden oder zu verstärkenden Vibrationen zu sein.

6.   Maschine gemäss den Ansprüchen 1 bis 5, dadurch gekennzeichnet, dass die Regelmittel (9, 9') die Phase und die Amplitude des Erregungssignals ändern, um die erfassten Vibrationen zu minimieren.

7. Maschine gemäss den Ansprüchen 1 bis 5, dadurch gekennzeichnet, dass die Regelmittel (9, 9') die Phase und die Amplitude des Erregungssignals ändern, um die erfassten Vibrationen zu maximieren.

8. Maschine gemäss den Ansprüchen 1 bis 7, dadurch gekennzeichnet, dass für die (n) Pole die Wicklungen der schräg gegenüberliegenden Pole gleichzeitig in Phasenopposition durch das von den Beaufschlagungsmitteln (6, 6') gelieferte alternative Erregungssignal versorgt werden.

9. Maschine gemäss den Ansprüchen 1 bis 7, dadurch gekennzeichnet, dass die Wicklungen der (n) Pole so zusammengefasst sind, dass sie zwei Polpaare bilden, deren zugeordnete Wicklungen von einem um 90° phasenverschobenen Erregungssignal versorgt werden.

10. Maschine gemäss den Ansprüchen 1 bis 7, dadurch gekennzeichnet, dass die Steuermittel (6') auf jede der den (n) Polen zugeordneten Kompensationswicklungen mit einer Frequenz einwirken, die ein Vielfaches der vom Anker getragenen Kerbenanzahl ist.

# Fig.1

P1  5  E1
2
1
E4
P4
4
P2
5
5
E2
E3  P3  5
3

# Fig.2

6
7
I=
8
E1
E3
V  A  φ
9
10
11

Fig. 3

Fig. 4

Fig. 5A

Fig. 5B

Fig. 5C

Fig. 5D

Fig. 6

Fig. 7